# EUROPEAN PATENT SPECIFICATION

(11) **EP 0 380 651 B1**
(45) Date of publication and mention of the grant of the patent: **25.03.1998**
(21) Application number: 89909336.3
(22) Date of filing: 23.06.1989
(51) Int. Cl.: B32B 3/02, B32B 31/00

(54) **LATEX FUSION BONDED PILE CARPETS AND CARPET TILE**
FLORTEPPICHE UND TEPPICHFLIESSEN MIT GESCHMOLZENEM LATEXRÜCKEN
MOQUETTES VELOUTEES ET CARREAU DE MOQUETTE LIES PAR FUSION DE LATEX

(30) Priority: 25.07.1988 US 224057
(43) Date of publication of application: 08.08.1990
(73) Proprietor: INTERFACE, INC., Atlanta, Georgia 30339 (US)
(72) Inventor: BLAKELY, Lawrence, W., LaGrange, GA 30240 (US); HOWE, Michael, A., LaGrange, GA 30240 (US)
(74) Representative: Bassett, Richard Simon
(86) International application number: US8902766
(87) International publication number: WO9000967

(56) References cited:
- EP-A- 0 315 466
- GB-A- 1 296 109
- US-A- 3 414 458
- US-A- 4 522 857
- US-A- 4 689 256
- US-A- 4 808 459

## Description

### Background of the Invention

This invention relates to fusion bonded pile carpet and carpet tile which use latex as the yarn-locking adhesive and to production methods for such carpet and carpet tile.

Pile carpet is generally manufactured in one of two ways. The pile yarn may be woven or tufted through a primary backing. The yarn is then secured to the primary backing with an adhesive precoat. This type of carpet in which yarn is mechanically as well as adhesively attached to backing is generally termed "woven" or "tufted" carpet. Alternatively, yarn may be cut or looped and positioned to form a pile layer that is then secured to the primary backing with adhesive. Carpet of this type is commonly referred to as "fusion bonded" carpet.

Fusion bonded carpet is generally categorized by the way the pile yarn layer is produced. In an "I-tuft" process, yarn is first cut into short, straight strands, and then the yarn ends are bonded to a primary support backing with adhesive. In a "U-tuft" process, a pile yarn layer is formed of folded yarn strands. The folded sections of the strands are then secured to the primary backing with an adhesive layer such that in the final carpet product, both ends of each cut strand protrude from the adhesive base.

The most widely used method of manufacture of fusion bonded carpet presently involves the use of a nonlatex PVC (polyvinyl chloride) plastisol formulation as the bonding adhesive. Typically, PVC plastisol is dispensed over a support layer to form an adhesive layer that penetrates into the support layer. The adhesive layer is then contacted with pile forming yarn. The PVC plastisol is cured, creating a product in which the yarn fibers are secured in the PVC layer and thereby bonded to the support layer. Increased strength may be obtained by bonding a secondary backing to the support layer.

In order to make a durable fusion bonded carpet in which the support layer does not peel away from the secondary backing, the adhesive which has permeated into the support layer must contact and bond with the material forming or adhering the secondary backing. The use of a nonlatex plasticized PVC as the yarn locking adhesive limits the variety of backing structures that may be applied to the carpet. This is true because nonlatex PVC plastisol does not bond strongly to common carpet backing materials such as bitumen, EVA (ethylene-vinylacetate), APP (atactic polypropylene), hot melts, urethanes, and SBR (styrene-butadiene). Furthermore, PVC plastisol is relatively expensive.

A fusion bonded carpet which does not use PVC as the pile yarn adhesive is described in United States Patents 4,371,576 and 4,576,665. The carpet is prepared by forcing a heated hot melt adhesive through a liquid permeable support layer to contact with the pile forming yarn on the opposite side of the base layer. The adhesive is then allowed to cool, during which time the pile forming yarn and support layer are secured.

US Patent No. 3,414,453 discloses a non-cracking tufted carpet with a non-woven secondary backing. The base segments of the yarn loops are bonded to the underside of the primary carpet backing by means of an adhesive such as a latex of natural or synthetic rubber.

US Patent No. 4,522,857 discloses a freelay tufted or bonded carpet tile which has a carpet base of foam to increase the conform level. The bonded carpet consists of cut pile yarns of nylon or other suitable material implanted on a PVC or hot melt adhesive.

US Patent No. 4,689,256 discloses a tufted carpet tile which has a primary backing having a fibrous face and a fibrous back, a barrier layer adjacent to the fibrous back which included a nonhalogenated latex vinyl polymer and a flame retardant filler material.

GB-A-1,296,109 discloses a double backed tufted carpet. The pile fibers are anchored to the primary backing by application of an adhesive such as a latex.

The present invention provides a latex bonded carpet or carpet tile and methods of manufacture of such a carpet or carpet tile as defined in the accompanying claims. The latex adhesive base is compatible with a wide variety of adhesives and secondary backings, which provides the carpet manufacturer with a greater flexibility in choosing materials for carpet construction. Latex adhesives provide strong fiber lock and wear durability. Furthermore, latex is relatively inexpensive, and has good combustion performance.

Examples of latexes which may be used in the present invention are defined in the accompanying claims.

It is therefore an object of this invention to provide a fusion bonded carpet which has a yarn locking adhesive which is compatible with a wide variety of adhesives and secondary backing materials.

It is another object of this invention to provide a fusion bonded carpet with good fiber lock and durability.

It is still another object of this invention to provide a fusion bonded carpet with good combustion performance.

It is a still further object of this invention to provide a fusion bonded carpet which is relatively inexpensive.

### Brief Description of the Drawings

FIG. 1 is a simplified side elevation view of apparatus for the first stage of manufacture of carpet in accordance with the present invention using an I-tuft process.

FIG. 2 is a simplified side elevation view of apparatus for the second stage of manufacture of carpet in accordance with the present invention using an I-tuft process.

FIG. 3 is a simplified side elevation view of apparatus for the first stage of manufacture of carpet in accordance with the present invention using a U-tuft process.

FIG. 4 is a simplified side elevation view of apparatus for the second stage of manufacture of carpet in accordance with the present invention using a U-tuft process.

FIG. 5 is a schematic representation of the third stage of manufacture of carpet in accordance with the present invention using either an I-tuft or U-tuft process.

FIG. 6 is a cross sectional view of carpet manufactured in accordance with the present invention using an I-tuft process.

FIG. 7 is a cross sectional view of carpet manufactured in accordance with the present invention using a U-tuft process.

### Detailed Description of the Drawings

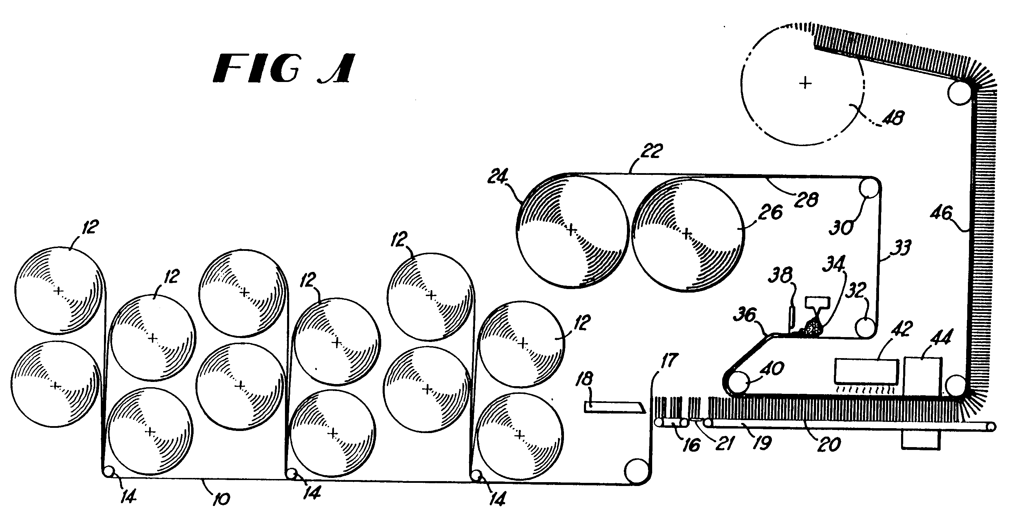

In one embodiment of the present invention, precursor I-tufted carpet is manufactured as illustrated in FIG. 1 by advancing yarn strands 10 from beams 12 past guide rolls 14 to a belt 16, positioned adjacent and normal to the yarn strands 10 The yarn 10 advances to a predetermined height above the belt 16, where a cutting blade 18, positioned slightly above and parallel to the belt 16 oscillates forward across the edge of the belt 16, severing the yarn 10 and forcing the cut strands 17 onto the belt 16. The cutting blade 18 then oscillates backward, allowing for the further advancement of yarn strands 10, and repetition of the yarn cutting procedure. Advancement of yarn 10 and oscillation of the cutting blade 18 are synchronized to cause rapid propagation of cut strands 17 onto and across the belt 16, producing a pile yarn aggregation 20 of side-by-side yarns 17 standing on end on belt 16. The pile yarn aggregation 20 travels across the belt 16, over plate 21, and onto a conveyor 19.

Simultaneously, a web of non-woven fiberglass 22 from roll 24 and a web of fiberglass mesh 28 from roll 26 are advanced together over guide rolls 30 and 32. The nonwoven fiberglass 22 together with fiberglass mesh 28 constitute the primary backing 33. A latex adhesive formulation 34 is dispensed onto the advancing fiberglass mesh 28 which provides a layer 36 of adhesive which penetrates through the fiberglass mesh layer 28 into the nonwoven fiberglass web 22. Uniformity of spread and thickness of the latex 36 is achieved by means of a doctor blade 38. The viscosity of the latex may range from 40-120 Pa.s (40,000-120,000 centipoise).

A portion of the latex formulation 34 penetrates into the fiberglass mesh 28 and nonwoven fiberglass 22, which results in bonding of the two layers 22 and 28 when the adhesive 34 is cured. The desired thickness of the latex layer 36 is dependent on the yarn used and the positioning and density of the yarn strands 17 in the pile yarn aggregation 20. An adhesive layer 36 of thickness of 1,27-3,81 mm (0.050-0.150 inch) is adequate for an I-tufted pile yarn aggregation for carpet with a final yarn weight in the range of 0.466-2.175 kg/m² (15-70 ounces/yd²).

The fiberglass mesh 28 and nonwoven fiberglass layer 22 carrying the latex adhesive layer 36 travels around marriage roller 40, which presses the adhesive 36 into the ends of cut yarn strands 17 of the pile yarn aggregation 20. The yarn strands 17 adhere to the latex layer 36, and the advancing yarn 17 and primary backing 33 composition travels past a heater 42, positioned on the backing 33 side of the composition, which raises the temperature of the latex 36 to the boiling point of water. The temperature must be elevated at a rate sufficiently slow to prevent rapid bubbling of the water out of the latex, which results in the separation of the latex 36 from the cut fibers 17. For example, an IR (infrared) heater with a flux density of 0,93-3,88 W/cm² (6 - 25 watts/in²) may be used at 25 - 75% of maximum capacity, with an exposure time of 1 - 5 minutes. The carpet then passes through a high velocity hot-air dryer 44, which blows hot air to remove the moisture expelled from the latex layer 36. The air temperature within the dryer 44 should be 93-149°C (200 - 300°F), and dwell time within the dryer 44 should be 2 - 10 minutes.

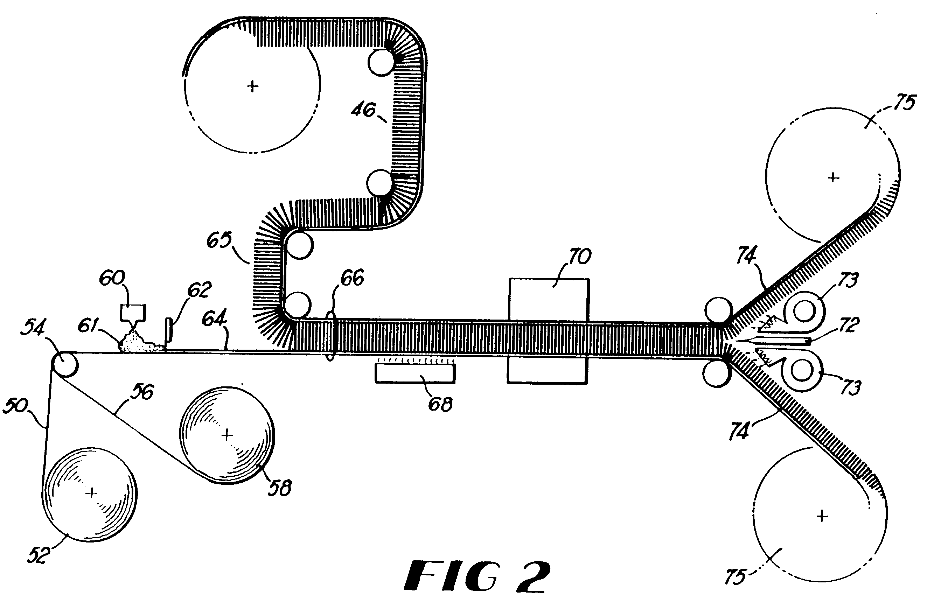

The precursor I-tufted carpet 46 with cured adhesive 36 is then either collected onto roll 48, or proceeds directly to Stage II of the I-tuft procedure, as illustrated in FIG. 2.

There, fiberglass mesh 50 from roll 52 is advanced together with and above a web of nonwoven fiberglass 56 from roll 58 under a dispenser 60, which deposits a latex formulation 61 on the fiberglass mesh 50 and nonwoven fiberglass 56. Spreading of the latex 64 is accomplished with a doctor blade 62. Penetration of the fiberglass mesh 50 and nonwoven fiberglass 56 occur as described in Stage I above. The fiberglass mesh 50 and nonwoven fiberglass 56 is advanced with the simultaneously advancing precursor I-tufted carpet 46 from Stage I (FIG. 1) so that latex adhesive layer 64 contacts yarn ends 65. As the cut yarn ends 65 embed securely into the latex layer, a sandwich structure 66 is formed comprising layers of nonwoven glass 22, fiberglass mesh 28, (cured) latex 36, cut pile yarn aggregation 20, (uncured) latex 64, fiberglass mesh 50 and nonwoven glass 56. The sandwich 66 travels past a heater 68 which raises the temperature of the latex to the boiling point of water at a rate sufficiently slow to prevent rapid bubbling of the water out of the latex. For example, an IR (infrared) heater with a flux density of 0,93-3,88 W/cm² (6 - 25 watts/in²) may be used at 50 - 75% of a maximum capacity with an exposure time of 1 -10 minutes. The sandwich 66 then travels through a hot air dryer 70, where hot moisture is removed. A dwell time of 2 - 10 minutes in air at a temperature of 135-163°C (275 - 325°F) is sufficient to remove the moisture and cure the latex. The pile yarn aggregation 20 of the sandwich 66 is then severed by splitter 72, to provide two carpet webs 74; which are further dried by hot air dryers 73, and collected onto rolls 75.

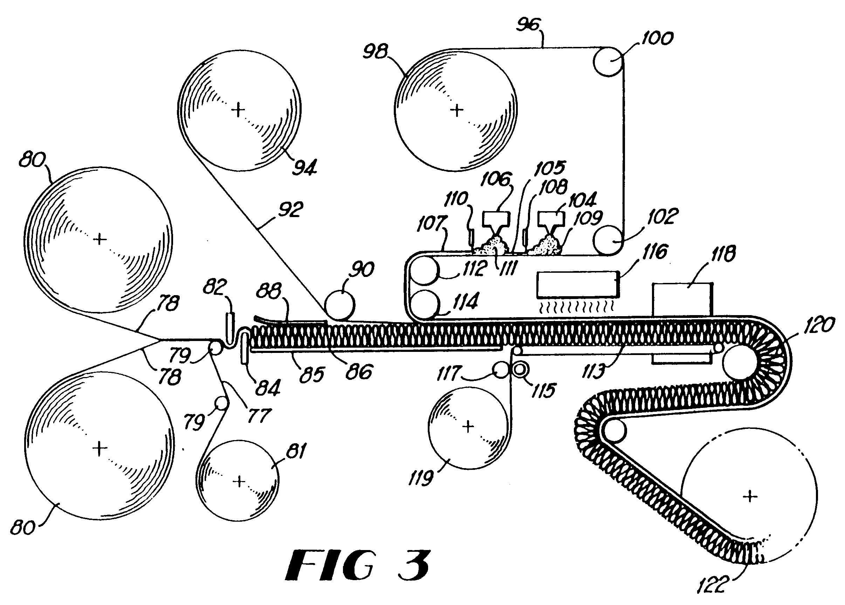

In the first stage of the U-tuft embodiment of the present invention, as illustrated in FIG. 3, yarns 78 supplied from beams 80 are fed along with support paper 77 from roll 81 past upper and lower pleater bars 82 and 84, respectively, which reciprocate transverse to the plane in which the yarns 78 and support paper 77 travel to form a pleated yarn aggregation 86. The advancing pleated aggregation 86 advances over bed 85 and is maintained with a rigid sheet 88 which extends between pleater bars 82, 84 and guide roll 90. Advancing fiberglass mesh 92 from roll 94 travels under guide roll 90 to lie against and travel with the pleated aggregation 86.

A nonwoven fiberglass web 96 from roll 98 also travels around guide rolls 100, 102 past a first dispenser 104 which applies a layer 105 of high viscosity latex formulation 109 40-120 Pa.s (40,000-120,000 cps) and a second dispenser 106, which provides a layer 107 of low viscosity latex formulation 111 10-50 Pa.s (10,000-50,000 cps) on top of the layer of high viscosity latex formulation 105. Uniformity of spread and thickness of each latex layer is achieved with doctor blades 108 and 110 positioned after each latex dispenser 104 and 106. The nonwoven fiberglass 96 with latex adhesive upper coatings 105 and 107 then travels around guide roll 112 and is pressed by marriage roller 114 into contact with the fiberglass mesh 92. The low viscosity latex formulation layer 107 penetrates through the fiberglass mesh 92 and into the yarn pleating 86, securing the pleats in the adhesive. The high viscosity latex layer 105 penetrates into the fiberglass mesh 92, bonding it to the nonwoven glass layer 96. The fiberglass mesh layer 92 and the nonwoven glass layer 96 together form support layer 95 (See Figure 7).

Support paper 77 is pulled from the pleated yarn aggregation 86 by a motor driven master roll 115 with slave roll 117, positioned past and below bed 85. The paper is collected onto beam 119.

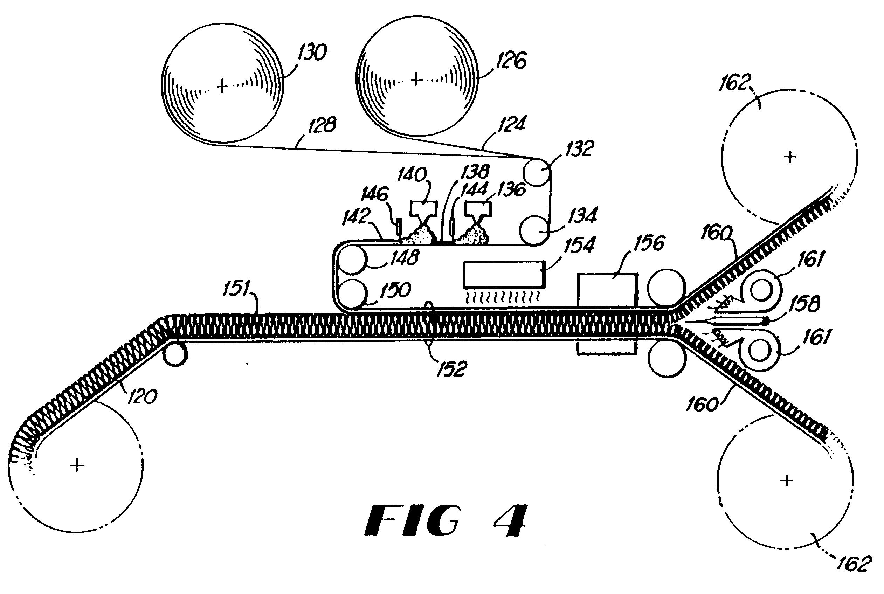

The nonwoven fiberglass 96, with fiberglass mesh 92 and pleated pile 86 underneath, advance onto belt 113 and travels past a heater 116 and high velocity hot-air dryer 118, under the conditions described above for Stage I of the I-tuft procedure (Fig. 1). The precursor U-tufted carpet 120 so formed may be collected onto roll 122 or may proceed directly into Stage II of the U-tuft procedure, as illustrated in FIG. 4.

In Stage II of the U-tuft process of the present invention, as illustrated in Fig. 4, nonwoven fiberglass web 124 from roll 126 is advanced together with fiberglass mesh 128 from roll 130 around guide roll 132 and 134 and past a first dispenser 136 which applies a layer of high viscosity latex formulation 138 40-120 Pa.s (40,000-120,000 cps) to the surface of the fiberglass mesh; and past a second dispenser 140, which provides a layer of low viscosity latex formulation 142 10-50 Pa.s (10,000-50,000 cps) on top of the high viscosity latex formulation 138. Uniformity of spread and thickness of each latex layer is achieved with doctor blades 144, 146. The high viscosity latex layer 138 penetrates through the fiberglass mesh into the nonwoven glass. The fiberglass mesh 128 and nonwoven fiberglass web 124 carrying the latex adhesive layer 142 travel past guide roll 148 to marriage roll 150 where the adhesive 142 is pressed into contact with the unbonded pleated pile 151 of the precusor U-tufted carpet 120 from stage I of the U-tufted process (FIG. 3). The low viscosity latex formulation layer 142 penetrates into the unbonded pleated pile 151 surface of the precursor U-tufted carpet 120, securing the pleats into the adhesive 142. A U-tufted sandwich 152 results, comprising layers of nonwoven glass 124, fiberglass mesh 128, (uncured) latex 138, 142, pleated pile 86, (cured) latex 105, 107, fiberglass mesh 92 and nonwoven glass 96. This U-tuft sandwich travels past a heater 154, and then through a hot air oven 156 to remove the hot moisture, under the same conditions as described in Stage II of the I-tuft procedure (FIG. 2). The pleated yarn of the U-tufted sandwich is then severed by splitter 158, to provide two U-tufted carpet webs 160, further dried by hot air dryers 161 and collected onto rolls 162.

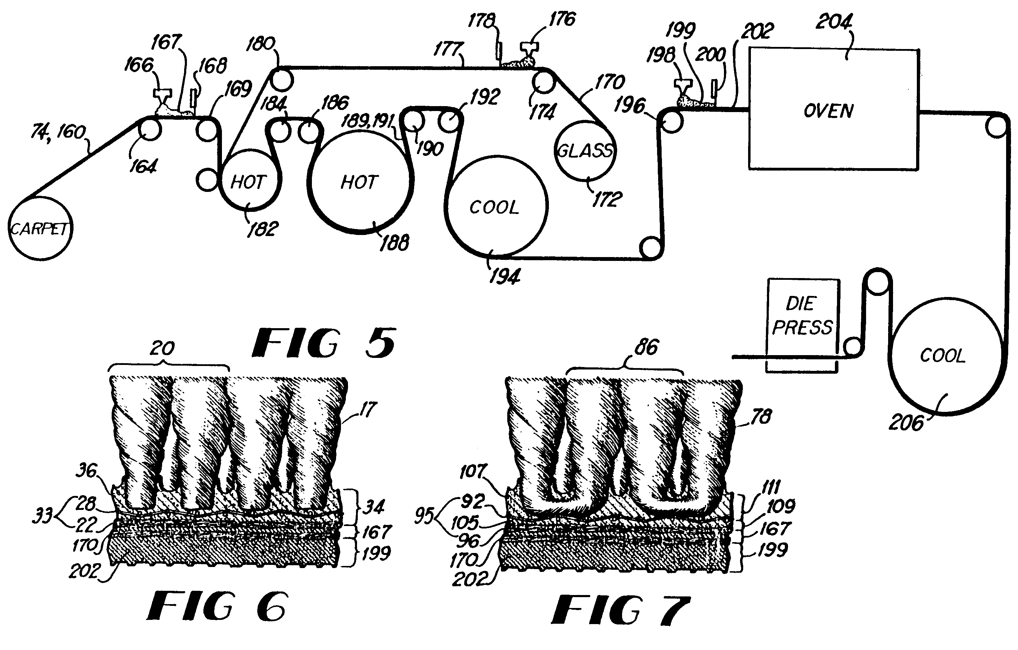

In one embodiment of the present invention, a nonwoven fiberglass layer is laminated to the I-tufted or U-tufted carpet sheet 74 or 160 before a secondary backing, if desired, is applied. This fiberglass mesh support layer allows for added dimensional stability of the final carpet product, as described in U.S. Patents 4,010,301 and 4,010,302. This is illustrated in FIG. 5 where I-tufted 74 or U-tufted 160 carpet webs from rolls 76 or 162 respectively, travel past guide roll 164 to a first dispenser 166 which applies a puddle of laminating adhesive 167 to back of the carpet. This laminating adhesive 167 may be a nonlatex PVC plastisol, or a compatible latex adhesive. Doctor blade 168, positioned after the first dispenser, insures the proper thickness and spread of the adhesive layer 169. Simultaneously, nonwoven fiberglass 170 from roll 172 travels around guide roll 174 past a second dispenser 176 which applies a layer of laminating adhesive 177 to the surface of the nonwoven fiberglass 170, a portion of which penetrates into the fiberglass. Doctor blade 178, positioned after the dispenser, insures proper thickness and spread of the laminating adhesive layer 177. The nonwoven fiberglass 170 with laminating adhesive layer 177 then travels past guide roll 180 to a first heating means 182, where the adhesive layer 177 on the nonwoven fiberglass 170 contacts laminating adhesive layer 169 of the carpet web 74 or 160. The heating means should be at a temperature sufficient to cure the adhesive. For example, hot oil drums at a temperature from 204-246°C (400°F to 475°F) may be employed when the adhesive is a nonlatex PVC plastisol. The carpet web 74 or 160 with adhesives 169, 177 and nonwoven fiberglass support 170 proceeds past guide rolls 184, 186 past a second heating means 188 to further cure the adhesive. The temperature range of the second heating means may be in the same range as that of the first heating means. Optionally, the carpet web so produced 189 or 191 continues around guide rolls 190, 192, past a cooling means 194 to guide roll 196. For example, the cooling means 194 may be a cool water drum.

In an alternate embodiment, if the nonwoven fiberglass is not desired in the secondary backing, the carpet web 74 or 160 from roll 75 or 162, respectively may advance directly to guide roll 196. In either embodiment, the carpet travels past a third dispenser 198 which applies a liquid secondary backing material 199 to the back of the carpet. Doctor blade 200 or coater 201 (not illustrated) insures uniformity of spread and thickness of the backing layer 202. The liquid secondary backing material 199 is generally of a viscosity range 10-20 Pa.s (10,000 - 20,000 cps). Liquid secondary backing materials include nonlatex PVC plastisol, atactic polypropylene, polyvinylidene chloride, bitumen, ethylene-vinyl acetate copolymers, hot melt formulations styrene butadiene rubber (SBR) and polyurethanes. The liquid secondary backing materials may be formulated with fillers, flame retardants, thickeners or other compounds to increase their usefulness as carpet backing.

The carpet web 74 or 160 with liquid secondary backing material 202 proceeds through curing means 204, which solidifies the backing material. If the curing means is heat, it is important that it not be directed to the pile surface of the carpet in order to protect the pile yarn from charring.

The carpet web 74 or 160 with cured secondary backing 202 advances, optionally, past cooling means 206 to roller or alternatively, to a die press for the manufacture of carpet tile.

In yet another embodiment of the present invention, not illustrated, a solid secondary backing may be laminated to the carpet sheets formed in accordance with FIG. 1 through 4. Typical solid secondary backing materials include urethane films, woven or nonwoven fabrics, or plastic films made from polyester, polyamides, polyethylene EVA or PVC. Adhesives for these solid secondary backing materials include atactic polypropylene, hot melts, SBR, VAE, EVA, PVDC, PVC and urethane.

FIG. 6 is a cross sectional view of carpet 189 manufactured in accordance with the present invention using an I-tuft process and the apparatus of FIGS. 1, 2 and 5. Cut yarn strands 17 form a pile yarn web 20 such that only one end of each yarn strand protrudes out of the upper surface of a latex adhesive base layer 36. Support layer 33 of fiberglass mesh layer 28 and nonwoven glass 22 is adjacent to the lower surface of the latex adhesive base 36. A second layer of nonwoven fiberglass 170 is positioned beneath the nonwoven fiberglass 22 and secondary backing 202 is beneath the nonwoven fiberglass 170. FIG. 6 further illustrates the manner of adhering the carpet layers according to the present invention. The latex adhesive 34 penetrates through the first fiberglass mesh layer 28 into the nonwoven fiberglass 22 where it contacts and bonds with liquid adhesive 167 used to laminate the second layer of nonwoven fiberglass 170 to the nonwoven fiberglass 22. The liquid adhesive 167 embedded in the second nonwoven fiberglass layer 170 further contacts and bonds with the secondary backing material 199. In the preferred mode, the liquid adhesive has the same composition as the secondary backing material, minimizing the number of bonding adhesive interfaces.

Carpet 191 manufactured in accordance with the present invention using a U-tufted process, illustrated in Fig. 7, is identical in structure to the carpet 189 illustrated in FIG. 6, with the exception that the pile yarn web 86 comprises folded yarn strands, which are secured in an adhesive base layer 107 or 142 such that both ends of each folded strand protrude from the base.

One of the advantages of the present invention over the prior methods of preparation of fusion bonded carpet is that a variety of secondary backings may be employed.

As described above, in carpet made in accordance with the present invention, for example, as illustrated in Fig. 6, there may be two polymeric bonded interfaces, that of the latex adhesive fusion bonding material 36 with the adhesive 167 used to adhere the second nonwoven fiberglass support layer 170, and that of the adhesive 167 with the secondary backing material 199 or adhesive used to bind the secondary backing. In the preferred mode, the adhesive 167 has the same composition as the secondary backing material 199 or adhesive used to bind the secondary backing, minimizing the number of polymeric bonding interfaces to one.

Nonlatex PVC plastisol as the pile yarn web bonding adhesive limits the choice of adhesives which may be used in carpet construction because nonlatex PVC plastisol does not bind adequately to common carpet adhesives and backing materials such as bitumen, EVA, APP, hot melts, urethanes or SBR. When the adhesive of the fusion bonded carpet forms a weak bond with the adjacent polymeric formulation, there is a potential for carpet peel, which reduces the useful life of the carpet. Latexes described in the present invention will bond adequately to most common backing materials, to form a carpet product that will not peel over time.

Latexes that may be employed in the fusion bonding adhesive formulation of the invention are defined in the accompanying claims.

The latex may be formulated with other compounds to increase its suitability as a fusion bonding adhesive and to impart added beneficial properties to the carpet. See Table I in Example I. For example, a flame retardant may be added such as alumina trihydra ATH), which at high temperature generates steam instead of smoke. Other flame retardant compounds include carbonates, such as CaCO₃, MgCO₃, BaCO₃, and metal oxides, borates, sulfonates and phosphates.

A dispersing agent may be added to the latex formulation to insure that the flame retardant is sufficiently evenly distributed. An example is Narlex-LD 45 (regd trade mark) by National Starch and Chemical Corporation.

A defoamer may be added to increase the density of the adhesive on curing. An example of a defoaming agent is Foammaster VF (regd trade mark) from Henkel Corporation.

The viscosity of the latex adhesive may be adjusted as necessary with a thickener such as Natrosol 250HR (regd trade mark) by Hercules, Inc. or Paragum 141 by Parachem Southern, Inc. Natrosol 250 HR (regd trade mark) is activated at a pH greater than 7.0, and therefore a base such as ammonia may be added to the latex formulation to increase the pH as necessary.

Catalysts may be added to crosslink the latex. For example, ammonium chloride acts as a catalyst to crosslink vinylacetate - ethylene. Crosslinking of a latex adhesive with the aid of compounds such as melamine is beneficial to prevent softening and degradation of the adhesive layer on exposure to water.

The present invention may be further understood by reference to the following working example which is intended to illustrate the invention.

### Example I

A carpet is prepared in accordance with FIGS. 1 and 2 or FIGS. 3 and 4, with a latex adhesive formulation as described in TABLE I.

**TABLE I**

| VAE Adhesive Formula | |
|---|---|
| Ingredient | Parts By Weight |
| VAE Latex | 192 |
| Aluminum Tri-Hydrate | 100 |
| Ammonium Chloride | 3.9 |
| DeFoamer | 0.1 |
| Ammonia | as needed to give pH of 7.5 |
| Natrosol 250 HR * | as needed to give desired viscosity |

| | |
|---|---|
| *Regd Trade mark | |

**TABLE II**

| Ingredient | Parts By Weight |
|---|---|
| SBR latex | 200 |
| Al(OH)₃ | 100 |
| defoamer | 0.1 |
| dispersant | 0.1 |
| Paragum 141 | as needed |

**TABLE III**

| Ingredient | Parts By Weight |
|---|---|
| Vinyl acetate acrylic ester | 217 |
| Al(OH)₃ | 100 |
| defoamer | 0.1 |
| dispersant | 0.1 |
| Paragum 141 | as needed |

Tables II and III show exemplary latex adhesive formulations in accordance with the invention.

## Claims

1. A latex bonded carpet or carpet tile, comprising in order:
(i) a pile yarn or pleated pile yarn aggregation;
(ii) a latex adhesive base;
wherein the latex adhesive has a viscosity ranging between 40-120Pa.s (40,000-120,000 centipoise) when applied; or
wherein the latex adhesive comprises a first layer of latex adhesive having a viscosity ranging from 40-120 Pa.s (40,000-120,000 centipoise) when applied and a second layer of latex adhesive having a viscosity ranging from 10-50 Pa.s (10,000-50,000 centipoise) when applied, on top of the first layer;
the latex adhesive being a polymer or copolymer selected from the group consisting of: ethylene-vinyl acetate copolymers, styrene-butadiene rubber (SBR), vinyl acetate-acrylic acid copolymer, and styrene-acrylic acid copolymer; polymers or copolymers of acrylic acid, methacrylic acid, vinylidene chloride; and
latex polymers or copolymers of vinyl chloride;
wherein the pile yarn or pleated pile yarn aggregation is embedded in the adhesive and protrudes therefrom; and
(iii) a support layer.

2. The carpet or carpet tile of Claim 1, wherein the latex adhesive formulation includes an ethylene-vinyl acetate copolymer.

3. The carpet or carpet tile of Claim 1 or 2, further comprising a secondary backing layer.

4. The carpet or carpet tile of Claim 3, wherein the secondary backing comprises a liquid secondary backing selected from the group consisting of non latex polyvinyl chloride plastisol, atactic polypropylene, polyvinylidene chloride, bitumen, polyurethane, ethylene-vinyl acetate copolymers, and styrene butadiene rubber (SBR); or a solid secondary backing selected from polyester, polyamide, and polyethylene films.

5. The carpet or carpet tile of Claim 3 or 4, further comprising a second support layer between the support layer and the secondary backing.

6. The carpet or carpet tile of Claim 5, wherein the support layer or second support layer is made of fiberglass.

7. The carpet or carpet tile of Claim 4, wherein the secondary backing is polyvinyl chloride plastisol.

8. A latex bonded carpet or carpet tile according to Claim 1, wherein the latex adhesive is a copolymer of methacrylic acid.

9. A method of making a latex bonded carpet or carpet tile comprising securing a pile yarn or pleated pile yarn aggregation to a support layer with a latex adhesive; wherein the latex adhesive has a viscosity ranging between 40-120Pa.s (40,000-120,000 centipoise) when applied; or
wherein the latex adhesive comprises a first layer of latex adhesive having a viscosity ranging from 40-120 Pa.s (40,000-120,000 centipoise) when applied and a second layer of latex adhesive having a viscosity ranging from 10-50 Pa.s (10,000-50,000 centipoise) when applied, on top of the first layer;
the latex adhesive being a latex polymer or copolymer selected from the group consisting of: ethylene-vinyl acetate copolymers, styrene-butadiene rubber (SBR), vinyl acetate-acrylic acid copolymer, and styrene-acrylic acid copolymer; polymers or copolymers of acrylic acid, methacrylic acid, vinylidene chloride; and polymers or copolymers of vinyl chloride.

10. A method as claimed in Claim 9 comprising the steps of:
(i) advancing a first support layer;
(ii) forming a latex adhesive layer on the first support layer;
(iii) advancing yarn past pleater bars to form an unbonded pleated yarn aggregation;
(iv) pressing the pleated yarn into the latex adhesive layer on the first support layer; and
(v) curing the latex adhesive.

11. The method of Claim 10, further comprising:
(i) providing a second support layer;
(ii) applying a layer of latex adhesive to the second support layer;
(iii) pressing the unbonded pleated yarn ends into the layer of latex formulation;
(iv) curing the latex; and
(v) severing the pleated yarn to provide two carpet webs.

12. A method as claimed in Claim 9, comprising:
(i) advancing yarn strand to a predetermined height above a bed;
(ii) severing the yarn to form a pile yarn aggregation;
(iii) providing a support layer;
(iv) applying a layer of latex adhesive to the support layer;
(v) pressing the pile yarn aggregation into the layer of latex adhesive to form a carpet web; and
(vi) curing the latex.

13. The method of Claim 12, further comprising:
(i) providing a second support layer;
(ii) applying a layer of latex adhesive to the second support layer;
(iii) pressing the unbonded pile yarn ends of the carpet web into the layer of latex formulation;
(iv) curing the latex; and
(v) severing the pile yarn aggregation to provide two carpet webs.

## Patentansprüche

1. Latexgebundene(r) Teppich oder Teppichfliesen, umfassend in der genannten Abfolge:
(i) ein Florgarn- oder gefälteltes Florgarnaggregat;
(ii) eine Latexklebstoffgrundlage;
wobei der Latexklebstoff eine Viskosität im Bereich zwischen 40 und 120 Pa·s (40.000-120.000 Centipoise) bei Applikation aufweist oder
wobei der Latexklebstoff eine erste Schicht aus Latexklebstoff mit einer Viskosität im Bereich von 40-120 Pa·s (40.000-120.000 Centipoise) bei der Applikation und eine zweite Schicht aus Latexklebstoff mit einer Viskosität im Bereich von 10-50 Pa·s (10.000-50.000 Centipoise) bei der Applikation auf der Oberseite der ersten Schicht umfaßt;
wobei der Latexklebstoff ein Polymer oder Copolymer, das unter Ethylen-Vinylacetat-Copolymeren, Styrol-Butadien-Kautschuk (SBR), Vinylacetat-Acrylsäure-Copolymer und Styrol-Acrylsäure-Copolymer, Polymeren oder Copolymeren von Acrylsäure, Methacrylsäure und/oder Vinylidenchlorid und Latexpolymeren oder -copolymeren von Vinylchlorid ausgewählt ist, ist und
wobei das Florgarn- oder gefältelte Florgarnaggregat in den Klebstoff eingebettet ist und daraus hervorsteht; und
(iii) eine Trägerschicht.

2. Teppich oder Teppichfliesen nach Anspruch 1, wobei die Latexklebstoffrezeptur ein Ethylen-Vinylacetat-Copolymer umfaßt.

3. Teppich oder Teppichfliesen nach Anspruch 1 oder 2, der (die) des weiteren eine sekundäre Rückenschicht umfaßt (umfassen).

4. Teppich oder Teppichfliesen nach Anspruch 3, wobei die sekundäre Rückenschicht einen flüssigen Sekundärrückenbestandteil, der unter Nichtlatexpolyvinylchloridplastisol, ataktischem Polypropylen, Polyvinylidenchlorid, Bitumen, Polyurethan, Ethylen-Vinylacetat-Copolymeren und Styrolbutadienkautschuk (SBR) ausgewählt ist, oder einen festen Sekundärrückenbestandteil, der unter Polyester-, Polyamid- und Polyethylenfilmen ausgewählt ist, umfaßt.

5. Teppich oder Teppichfliesen nach Anspruch 3 oder 4, der (die) eine zweite Trägerschicht zwischen der Trägerschicht und der sekundären Rückenschicht umfaßt (umfassen).

6. Teppich oder Teppichfliesen nach Anspruch 5, wobei die Trägerschicht oder die zweite Trägerschicht aus Glasfasern besteht.

7. Teppich oder Teppichfliesen nach Anspruch 4, wobei die sekundäre Rückenschicht aus Polyvinylchloridplastisol besteht.

8. Latexgebundene(r) Teppich 0 der Teppichfliesen nach Anspruch 1, wobei der Latexklebstoff aus einem Copolymer von Methacrylsäure besteht.

9. Verfahren zur Herstellung eines latexgebundenen Teppichs oder von latexgebundenen Teppichfliesen durch Befestigen eines Florgarn- oder gefältelten Florgarnaggregats an einer Trägerschicht mit Hilfe eines Latexklebstoffs, wobei der Latexklebstoff bei der Applikation eine Viskosität im Bereich von 40-120 Pa·s (40.000-120.000 Centipoise) aufweist oder
wobei der Latexklebstoff eine erste Schicht aus Latexklebstoff mit einer Viskosität im Bereich von 40-120 Pa·s (40.000-120.000 Centipoise) bei der Applikation und eine zweite Schicht aus Latexklebstoff mit einer Viskosität im Bereich von 10-50 Pa·s (10.000-50.000 Centipoise) bei der Applikation auf der Oberseite der ersten Schicht umfaßt;
wobei der Latexklebstoff ein Latexpolymer oder Copolymer, das unter Ethylen-Vinylacetat-Copolymeren, Styrol-Butadien-Kautschuk (SBR), Vinylacetat-Acrylsäure-Copolymer und Styrol-Acrylsäure-Copolymer, Polymeren oder Copolymeren von Acrylsäure, Methacrylsäure und/oder Vinylidenchlorid und Polymeren oder Copolymeren von Vinylchlorid ausgewählt ist, ist.

10. Verfahren nach Anspruch 9, durch
(i) Vorschieben einer ersten Trägerschicht;
(ii) Ausbilden einer Latexklebstoffschicht auf der ersten Trägerschicht;
(iii) Vorschieben von Garn über Faltenlegestäbe zur Bildung eines nichtgebundenen gefältelten Garnaggregats;
(iv) Einpressen des gefältelten Garns in die Latexklebstoffschicht auf der ersten Trägerschicht und
(v) Härten des Latexklebstoffs.

11. Verfahren nach Anspruch 10, das die folgenden weiteren Schritte umfaßt:
(i) Vorsehen einer zweiten Trägerschicht;
(ii) Applizieren einer Schicht aus Latexklebstoff auf die zweite Trägerschicht;
(iii) Einpressen der nichtgebundenen gefältelten Garnenden in die Schicht der Latexrezeptur;
(iv) Härten des Latex und
(v) Schneiden des gefältelten Garns zur Herstellung von zwei Teppichbahnen.

12. Verfahren nach Anspruch 9, umfassend die folgenden Schritte:
(i) Vorschieben eines Garnstrangs auf eine vorgegebene Höhe oberhalb eines Betts;
(ii) Schneiden des Garns zur Bildung eines Florgarnaggregats;
(iii) Vorsehen einer Trägerschicht;
(iv) Applizieren einer Schicht aus Latexklebstoff auf die Trägerschicht;
(v) Einpressen des Florgarnaggregats in die Schicht aus Latexklebstoff zur Bildung einer Teppichbahn und
(vi) Härten des Latex.

13. Verfahren nach Anspruch 12, das die folgenden weiteren Schritte umfaßt:
(i) Vorsehen einer zweiten Trägerschicht;
(ii) Applizieren einer Schicht aus Latexklebstoff auf die zweite Trägerschicht;
(iii) Einpressen der nichtgebundenen Florgarnenden der Teppichbahn in die Schicht aus der Latexrezeptur;
(iv) Härten des Latex und
(v) Schneiden des Florgarnaggregats zur Herstellung von zwei Teppichbahnen.

## Revendications

1. Moquette ou carreau de moquette lié(e) par latex, comprenant, dans l'ordre :
(i) un agrégat de fils de poil ou de fils de poil plissés ;
(ii) une base de latex adhésif ;
le latex adhésif ayant une viscosité allant de 40 à 120 Pa.s (40 000 à 120 000 cp) lorsqu'il est appliqué ; ou
le latex adhésif comprenant une première couche de latex adhésif ayant une viscosité allant de 40 à 120 Pa.s (40 000 à 120 000 cp) lorsqu'il est appliqué, et une seconde couche de latex adhésif ayant une viscosité allant de 10 à 50 Pa.s (10 000 à 50 000 cp) lorsqu'il est appliqué, sur le dessus de la première couche ;
le latex adhésif étant un polymère ou copolymère choisi dans le groupe constitué par : les copolymères éthylène-acétate de vinyle, un caoutchouc styrène-butadiène (SBR), un copolymère acétate de vinyle-acide acrylique et un copolymère styrène-acide acrylique ; les polymères ou copolymères de l'acide acrylique, de l'acide méthacrylique, du chlorure de vinylidène ; et les polymères ou copolymères latex du chlorure de vinyle ;
où l'agrégat de fils de poil ou de fils de poil plissés est inclus dans l'adhésif et fait saillie à partir de celui-ci ; et
(iii) une couche support.

2. Moquette ou carreau de moquette selon la revendication 1, dans lequel la formulation de latex adhésif inclut un copolymère éthylène-acétate de vinyle.

3. Moquette ou carreau de moquette selon la revendication 1 ou 2, comprenant en outre une couche de renfort secondaire.

4. Moquette ou carreau de moquette selon la revendication 3, dans lequel le renfort secondaire comprend un renfort secondaire liquide choisi dans le groupe constitué par un plastisol de poly(chlorure de vinyle) qui n'est pas un latex, un polypropylène atactique, un poly(chlorure de vinylidène), le bitume, un polyuréthane, les copolymères éthylène-acétate de vinyle et le caoutchouc styrène-butadiène (SBR) ; ou un renfort secondaire solide choisi parmi les films de polyester, de polyamide et de polyéthylène.

5. Moquette ou carreau de moquette selon la revendication 3 ou 4, comprenant en outre une seconde couche support entre la couche support et le renfort secondaire.

6. Moquette ou carreau de moquette selon la revendication 5, dans lequel la couche support ou seconde couche support est formée de fibre de verre.

7. Moquette ou carreau de moquette selon la revendication 4, dans lequel le renfort secondaire est un plastisol de poly(chlorure de vinyle).

8. Moquette ou carreau de moquette lié(e) par latex selon la revendication 1, dans lequel le latex adhésif est un copolymère de l'acide méthacrylique.

9. Procédé de fabrication d'une moquette ou d'un carreau de moquette lié(e) par latex, comprenant les étapes consistant à fixer un agrégat de fils de poil ou de fils de poil plissés à une couche support avec un latex adhésif ; dans lequel le latex adhésif a une viscosité allant de 40 à 120 Pa.s (40 000 à 120 000 cp) lorsqu'il est appliqué ; ou
dans lequel le latex adhésif comprend une première couche de latex adhésif ayant une viscosité allant de 40 à 120 Pa.s (40 000 à 120 000 cp) lorsqu'il est appliqué et une seconde couche de latex adhésif ayant une viscosité allant de 10 à 50 Pa.s (10 000 à 50 000 cp) lorsqu'il est appliqué, sur le dessus de la première couche ;
le latex adhésif étant un polymère ou copolymère de latex choisi dans le groupe constitué par : les copolymères éthylène-acétate de vinyle, un caoutchouc styrène-butadiène (SBR), un copolymère acétate de vinyle-acide acrylique et un copolymère styrène-acide acrylique ; les polymères ou copolymères de l'acide acrylique, de l'acide méthacrylique, du chlorure de vinylidène ; et les polymères ou copolymères du chlorure de vinyle.

10. Procédé selon la revendication 9, comprenant les étapes consistant à :
(i) faire avancer une première couche support ;
(ii) former une couche de latex adhésif sur la première couche support ;
(iii) faire avancer un fil sur des barres plisseuses pour former un agrégat de fils plissés non lié ;
(iv) presser le fil plissé dans la couche de latex adhésif sur la première couche support ; et
(v) durcir le latex adhésif.

11. Procédé selon la revendication 10, comprenant en outre les étapes consistant à :
(i) fournir une seconde couche support ;
(ii) appliquer une couche de latex adhésif sur la seconde couche support ;
(iii) presser les extrémités des fils plissés non liés dans la couche de formulation de latex ;
(iv) durcir le latex ; et
(v) couper le fil plissé pour fournir deux voiles de moquette.

12. Procédé selon la revendication 9, comprenant les étapes consistant à :
(i) faire avancer un brin de fils à une hauteur prédéterminée au-dessus d'un lit ;
(ii) couper le fil pour former un agrégat de fils de poil ;
(iii) fournir une couche support ;
(iv) appliquer une couche de latex adhésif sur la couche support ;
(v) presser l'agrégat de fils de poil dans la couche de latex adhésif pour former un voile de moquette ; et
(vi) durcir le latex.

13. Procédé selon la revendication 12, comprenant en outre les étapes consistant à :
(i) fournir une seconde couche support ;
(ii) appliquer une couche de latex adhésif sur la seconde couche support ;
(iii) presser les extrémités des fils de poil non liés du voile de moquette dans la couche de formulation de latex ;
(iv) durcir le latex ; et
(v) couper l'agrégat de fils de poil pour fournir deux voiles de moquette.
